# FASCICULE DE BREVET EUROPEEN

(11) **EP 0 955 429 B1**
(45) Date de publication et mention de la délivrance du brevet: **10.05.2000**
(21) Numéro de dépôt: 98440083.8
(22) Date de dépôt: 06.05.1998
(51) Int. Cl.: E05B 15/02, E05D 5/02, F16B 37/00

(54) **Ferrure pour porte, fenetre ou analogue**
Beschlag für Tür, Fenster o. dgl
Fitting for door, window or the like

(43) Date de publication de la demande: 10.11.1999
(73) Titulaire: FERCO INTERNATIONAL Ferrures et Serrures de Bâtiment Société Anonyme, 57400 Sarrebourg (FR)
(72) Inventeur: Klespert, Sylvain, 57400 Sarrebourg (FR); Litynec, Serge, 57400 Buhl Lorraine (FR); Kriner, Arsène, 57870 Walscheid (FR)
(74) Mandataire: Rhein, Alain

(56) Documents cités:
- EP-A- 0 528 213
- DE-A- 4 431 278
- GB-A- 815 049
- US-A- 4 666 055

## Description

L'invention concerne une ferrure pour porte, fenêtre ou analogue, du type ferrure de verrouillage, telle qu'une gâche, ferrure d'articulation ou autre, prévue apte à être immobilisée à l'intérieur d'une rainure ménagée, notamment, en feuillure du châssis ouvrant et/ou du cadre dormant de ladite porte, fenêtre ou analogue, à l'aide d'organes de fixation sous forme de vis pointeau aptes à coopérer avec un taraudage ménagé dans un orifice traversant ladite ferrure et se décomposant, dans le sens axial, en au moins deux portions.

Une telle ferrure est montrée par le document DE-A-4 431 278.

La présente invention concerne le domaine de la quincaillerie de bâtiment et, plus particulièrement, celui de la fabrication de ferrures.

L'on connaît déjà de nombreuses ferrures, notamment du type ferrure de verrouillage, d'articulation ou autre, destinées à équiper une porte, fenêtre ou analogue. A cet effet, cette dernière comporte, fréquemment, une rainure ménagée, notamment, en feuillure de son châssis ouvrant et/ou de son cadre dormant et à l'intérieur de laquelle est disposée et immobilisée une telle ferrure. En fait, une telle rainure présente souvent une forme en «T» à l'intérieur de laquelle peut coulisser la ferrure qui est alors immobilisée à l'aide d'organes de fixation, habituellement une vis pointeau montée dans un orifice taraudé ménagé dans ladite ferrure.

A ce propos, il est connu, lors de la fabrication de ladite ferrure, de réaliser, au niveau d'un orifice, un taraudage apte à coopérer, ultérieurement, avec une vis de fixation standard. La réalisation de ce taraudage impose alors l'utilisation d'un outillage approprié et implique une étape supplémentaire dans le processus de fabrication de la ferrure d'où une perte de temps et une augmentation du coût de revient de celle-ci.

Il est également connu de fabriquer une ferrure pourvue d'un orifice lisse non taraudé destiné à recevoir une vis auto-taraudeuse apte, d'une part, à réaliser un taraudage de ladite ferrure et, d'autre part, à assurer la fixation ou l'immobilisation de cette dernière à l'intérieur de la rainure. Or, il convient d'observer qu'une telle vis auto-taraudeuse présente un filetage adoptant une configuration bien particulière nécessitant un mode de réalisation spécifique. Aussi, de telles vis auto-taraudeuses s'avèrent bien plus coûteuses qu'une vis standard. Cet aspect est loin d'être négligeable si l'on pense que de telles ferrures sont fabriquées souvent en très grande série.

La présente invention se veut à même de répondre aux inconvénients précités au travers d'une nouvelle ferrure de conception particulièrement astucieuse et pourvue d'un orifice conçu apte à recevoir une vis pointeau standard.

A cet effet, l'invention concerne une ferrure pour porte, fenêtre ou analogue, du type ferrure de verrouillage, telle qu'une gâche, ferrure d'articulation ou autre, selon la revendication 1.

Les avantages découlant de la présente invention consistent en ce que, non seulement, il n'est plus nécessaire, en cours de fabrication de ladite ferrure, de reprendre et d'usiner cette dernière en vue de la réalisation d'un taraudage, celui-ci étant, en fait, réalisé directement lors de la mise en place de la vis pointeau, mais, en outre, cette vis peut être de type standard.

L'invention sera mieux comprise à la lecture de la description qui va suivre se rapportant au dessin joint en annexe et dans lequel :
- la figure 1 correspond à une vue schématisée et de dessus d'une ferrure selon l'invention ;
- la figure 2 est une vue schématisée, éclatée, en élévation et en coupe selon II - II de la ferrure représentée figure 1 ;
- la figure 3 correspond à une vue schématisée et en coupe selon III - III d'une telle ferrure immobilisée à l'intérieur d'une rainure en « T » ménagée en feuillure d'une porte, fenêtre ou analogue.

Tel qu'évoqué ci-dessus, la présente invention concerne le domaine de la quincaillerie du bâtiment et, plus particulièrement, celui de la fabrication des ferrures, du type ferrures de verrouillage, telle qu'une gâche, ferrures d'articulation ou autres.

Une telle ferrure 1 est destinée à équiper une porte 2, fenêtre ou analogue comportant une rainure 4 ménagée, notamment, en feuillure 3 de son châssis ouvrant et/ou de son cadre dormant.

C'est, plus particulièrement, à l'intérieur d'une telle rainure 4, par exemple en forme de «T», que va être introduite et immobilisée ladite ferrure 1.

En fait, une telle immobilisation est réalisée à l'aide d'organes de fixation 5 qui se présentent sous la forme d'au moins une vis pointeau 6 montée dans un orifice 8 traversant ladite ferrure 1.

Selon l'invention, ledit orifice 8 se décompose, dans le sens axial, en au moins deux portions 9, 9A dont la première 9 débouche au niveau de la face supérieure 10 de ladite ferrure 1, à l'endroit même où ladite vis pointeau 6 est introduite dans cette dernière.

Cette première portion 9, dans le sens d'introduction de ladite vis 6, est de forme tronconique en allant en s'évasant vers l'embouchure 12 de l'orifice 8 pour assurer le guidage de cette vis 6 en direction de la seconde portion 9A.

Cette seconde portion 9A de l'orifice 8 se situe dans le prolongement de la première portion 9, dans le sens de vissage de la vis pointeau 6. Elle comporte un diamètre inscrit d inférieur au diamètre nominal D de la vis 6 et débouche au niveau de la face inférieure 11 de ladite ferrure 1.

Selon une autre caractéristique de la présente invention, cette seconde portion 9A comporte un certain nombre de réservations 14A orientées axialement selon l'axe 15 de l'orifice 8. De telles réservations axiales 14A sont, en fait, définies aptes à permettre, par déplacement de matière à l'intérieur de ces dernières, la réalisation d'un taraudage 7 par ladite vis pointeau 6.

A ce propos, il convient d'observer que, lors du vissage de ladite vis pointeau 6, le filetage 16 de cette dernière a tendance, contrairement à une vis auto-taraudeuse qui, elle, creuse la paroi interne 17 pour définir les filets, à réaliser ces derniers par fluage de la matière, cette dernière étant alors déplacée, précisément, à l'intérieur desdites réservations 14A.

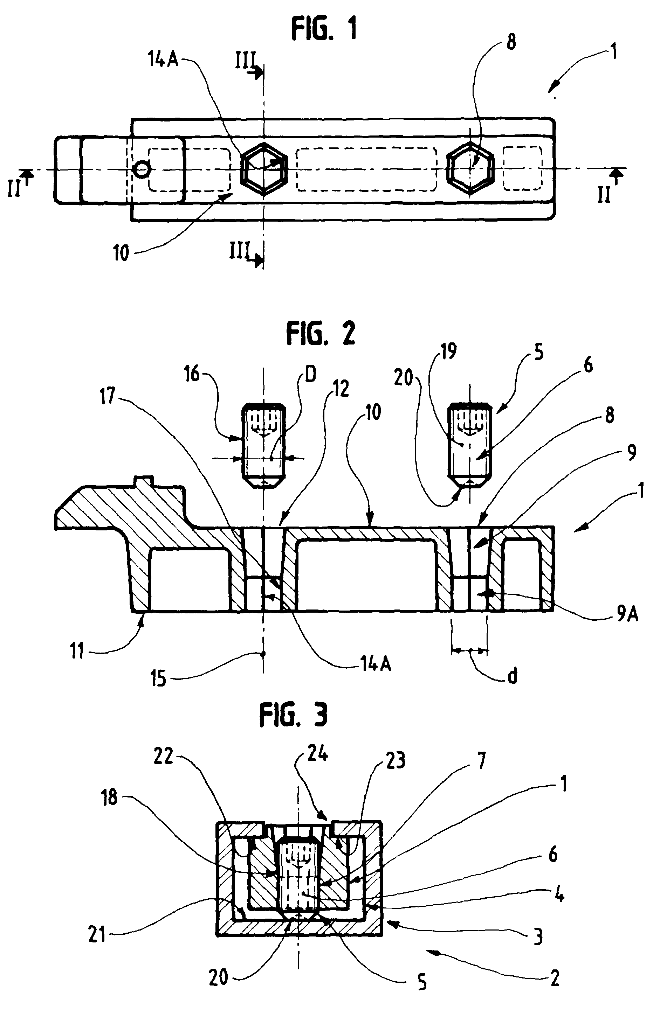

Selon l'invention, il est possible de définir de telles réservations axiales 14A en conférant à la section de la seconde portion 9A de l'orifice 8 une forme polygonale, de préférence octogonale ou encore hexagonale tel que visible figure 1.

La portion 9 présente une section identique à celle de la portion 9A facilitant l'amorce 18 du taraudage 7 par ladite vis pointeau 6, lors de l'introduction et du vissage de cette dernière.

Les deux portions 9 et 9A de l'orifice 8 présentent une section polygonale, notamment hexagonale ou octogonale, chaque coté du polygone de la seconde portion 9A se situant dans le prolongement d'un coté du polygone de la première portion tronconique 9.

Ainsi, l'on comprend que la présence des réservations 14A permet d'absorber l'excédant de matière repoussée lors de la réalisation du taraudage 7 par une vis standard laquelle est réalisée, avantageusement, en un matériau métallique, éventuellement en inox ou dans un métal dur trempé.

Tel que représenté figure 2, une telle vis pointeau 6 se présente, de préférence, sous la forme d'une vis sans tête 19, notamment à six pans creux ou à tête fendue, de manière à faciliter son introduction dans l'orifice 8.

Il a été représenté figure 3 une ferrure 1, selon l'invention, immobilisée à l'intérieur d'une rainure 4 en feuillure 3 d'une porte 2, fenêtre ou analogue. Il convient de préciser que le montage d'une telle ferrure 1 consiste, dans un premier temps, à disposer cette dernière à l'intérieur de ladite rainure 4, puis à intervenir sur la vis pointeau 6 de sorte que l'extrémité inférieure 20 de cette dernière émerge hors de la ferrure 1 et entre en contact avec le fond 21 de la rainure 4. Le fait de poursuivre plus avant le vissage de ladite vis pointeau 6, permet de repousser la ferrure 1 en direction des retours 22, 23 bordant l'ouverture 24 de ladite rainure 4 ici conformée en «T». C'est, plus précisément, contre ces retours 22, 23 que vient alors s'appuyer la face supérieure 10 de ladite ferrure 1 en vue de son immobilisation.

En ce qui concerne, plus particulièrement, ladite vis pointeau 6, celle-ci peut, soit être introduite dans l'orifice 8 après la mise en place de la ferrure 1 dans la rainure 4, soit être prémontée à l'intérieur de cet orifice 8, par exemple lors de la fabrication de ladite ferrure 1 ou, tout du moins, avant l'introduction de cette dernière à l'intérieur de la rainure 4.

Finalement, on remarquera qu'une ferrure 1 selon l'invention peut être réalisée en un matériau métallique, notamment par moulage, ou encore en un matériau de synthèse, plus particulièrement du PVC ou similaire.

Tel qu'il ressort de la description qui précède, la présente invention permet, d'une part, de simplifier la fabrication d'une telle ferrure et, d'autre part, de recourir à l'utilisation d'une vis métallique standard pour son immobilisation. Il en résulte un gain de temps appréciable ainsi qu'une réduction substantielle du coût de revient d'une telle ferrure. La présente invention apporte donc un progrès notable dans le domaine technique considéré.

## Revendications

1. Ferrure pour porte (2), fenêtre ou analogue, du type ferrure de verrouillage, telle qu'une gâche, ferrure d'articulation ou autre, prévue apte à être immobilisée à l'intérieur d'une rainure (4) ménagée, notamment, en feuillure (3) du châssis ouvrant et/ou du cadre dormant de ladite porte (2), fenêtre ou analogue, à l'aide d'organes de fixation (5) sous forme de vis pointeau (6) aptes à coopérer avec un taraudage (7) ménagé dans un orifice (8) traversant ladite ferrure (1) et se décomposant, dans le sens axial, en au moins deux portions (9, 9A),
caractérisé par le fait que :
- la première portion (9) de l'orifice (8), dans le sens d'introduction de la vis (6), est de forme tronconique en allant en s'évasant vers l'embouchure (12) de l'orifice (8) pour assurer le guidage de cette vis (6) en direction de la seconde portion (9A) ;
- cette seconde portion (9A) de l'orifice (8) présente une section de forme polygonale et comporte, d'une part, un diamètre inscrit (d) inférieur au diamètre nominal (D) de la vis (6) et, d'autre part, des réservations axiales (14A) définies aptes à permettre, par déplacement de matière à l'intérieur de ces dernières, la réalisation dudit taraudage (7) par ladite vis pointeau (6), l'amorce (18) dudit taraudage (7) étant facilitée par une section de forme polygonale de la première portion (9) de l'orifice (8) ;
- les sections polygonales de la première (9) et de la seconde portion (9A) de l'orifice (8) sont identiques, chaque coté du polygone de la seconde portion (9A) se situant dans le prolongement d'un coté du polygone de la première portion tronconique (9).

2. Ferrure (1) selon la revendication 1, caractérisée par le fait que la section polygonale de la première (9) et de la seconde portion (9A) de l'orifice (8) est de forme hexagonale ou octogonale.

3. Ferrure (1) selon l'une quelconque des revendications précédentes, caractérisée par le fait que ladite vis pointeau (6) est définie par une vis standard réalisée en un matériau métallique, éventuellement en inox ou dans un métal dur trempé.

4. Ferrure (1) selon l'une quelconque des revendications précédentes, caractérisée par le fait que ladite vis pointeau (6) est une vis sans tête (19), notamment à six pas creux ou à tête fendue.

## Patentansprüche

1. Beschlag für Tür (2), Fenster oder dergleichen vom Typ Verriegelungsbeschlag, wie z. B. Schließblech, Lagerbeschlag oder o.a., der vorgesehen ist zur Befestigung in einer Nut (4) insbesondere im Falz (3) des Flügels und/oder Stockrahmens der Tür (2), Fensters oder dergleichen mittels Befestigungsorganen (5) in Form von Stellschrauben (6) für das Zusammenwirken mit einem Innengewinde (7) das in eine Öffnung (8) eingeschnitten ist, die durch den Beschlag (1) hindurchgeht und sich in Axialrichtung aus mindestens zwei Abschnitten (9, 9A) zusammensetzt, dadurch **gekennzeichnet**, daß:
- der in Einführungsrichtung der Schraube (6) erste Abschnitt (9) der Öffnung (8) eine sich zur Mündung (12) der Öffnung (8) hin erweiterte konische Form hat für die Führung der Schraube (6) in Richtung auf den zweiten Abschnitt (9A);
- der zweite Abschnitt (9A) der Öffnung (8) einen Querschnitt von polygonaler Form hat und einerseits einen einbeschriebenen Durchmesser (d) kleiner als der Nenndurchmesser (D) der Schraube (6) und andererseits axiale Freiräume (14A) aufweist, die so definiert sind, daß sie durch Verlagerung von Material in das Innere derselben die Herstellung des Innengewindes (7) durch die Stellschraube (6) ermöglichen, wobei der Ansatz (18) des Innengewindes (7) erleichtert wird durch einen Querschnitt mit polygonaler Form des ersten Abschnitts (9) der Öffnung (8);
- die polygonalen Querschnitte des ersten (9) und zweiten Abschnitts (9A) der Öffnung (8) identisch sind, wobei jede Polygonseite des zweiten Abschnitts (9A) in Verlängerung einer Polygonseite des ersten, konischen Abschnitts (9) liegt.

2. Beschlag (1) nach Anspruch 1, dadurch **gekennzeichnet**, daß der polygonale Querschnitt des ersten (9) und zweiten Abschnitts (9A) der Öffnung (8) eine hexagonale oder oktogonale Form hat.

3. Beschlag (1) nach einem der vorangehenden Ansprüche, dadurch **gekennzeichnet**, daß die Stellschraube (6) aus einer Normschraube aus Metall besteht, gegebenenfalls aus Edelstahl oder einem gehärteten Hartmetall.

4. Beschlag (1) nach einem der vorangehenden Ansprüche, dadurch **gekennzeichnet**, daß die Stellschraube (6) eine Madenschraube (19) ist, insbesondere mit Innensechskant oder mit Schlitzkopf.

## Claims

1. Fitting for a door (2), window or the like, of a locking-fitting type, such as a keeper, hinged fitting or the like, designed so as to be capable of being immobilised inside a groove (4) provided for, in particular, in the fillister (3) of the frame and/or the sash-frame of said door (2), window or the like, by means of fixing organs (5) in the form of set screws (6) capable of co-operating with an internal thread (7) provided for in a hole (8) passing through said fitting (1) and comprised, in the axial direction, of at least two portions (9, 9A), characterised in that:
- the first portion (9) of the hole (8), in the direction of insertion of the screw (6), has a truncated shape widening towards the mouth (12) of the hole (8), in order to ensure the guidance of this screw (6) in the direction of the second portion (9A);
- this second portion (9A) of the hole (8) has a polygonally shaped cross-section and includes, on the one hand, an inscribed diameter (d) smaller than the nominal diameter (D) of the screw (6) and, on the other hand, axial recesses (14A) defined so as to be capable of allowing, through displacement of material inside the latter, the carrying out of said internal thread (7) by said set screw (6), the start (18) of said internal thread (7) being facilitated by a polygonally shaped cross-section of the first portion (9) of the hole (8);
- the polygonal cross-sections of the first portion (9) and the second portion (9A) of the hole (8) are identical, each side of the polygon of the second portion (9A) being located in the extension of a side of the polygon of the first, truncated portion (9).

2. Fitting (1) according to claim 1, characterised in that the polygonal cross-section of the first (9) and the second portion (9A) of the hole (8) has a hexagonal or octagonal shape.

3. Fitting (1) according to any of the preceding claims, characterised in that said set screw (6) is defined by a standard screw made of a metallic material, eventually of stainless steel or a tempered hard metal.

4. Fitting (1) according to any of the preceding claims, characterised in that said set screw (6) is a grub screw (19), in particular a hollow hexagonal screw or a slotted-head screw.
